**Europäisches Patentamt**

**European Patent Office**

**Office européen des brevets**

(19)

(11) Veröffentlichungsnummer: **0 048 389**
**B1**

(12)

# EUROPÄISCHE PATENTSCHRIFT

(45) Veröffentlichungstag der Patentschrift:
**23.01.85**

(51) Int. Cl.⁴: **C 08 L 51/04**

(21) Anmeldenummer: **81107079.6**

(22) Anmeldetag: **09.09.81**

(54) **Schlagfeste thermoplastische Formmasse.**

(30) Priorität: **20.09.80 DE 3035570**

(43) Veröffentlichungstag der Anmeldung:
**31.03.82 Patentblatt 82/13**

(45) Bekanntmachung des Hinweises auf die Patenterteilung:
**23.01.85 Patentblatt 85/4**

(84) Benannte Vertragsstaaten:
**BE DE FR GB IT NL SE**

(56) Entgegenhaltungen:
**FR - A - 2 090 643**
**FR - A - 2 134 399**
**FR - A - 2 162 154**
**FR - A - 2 197 042**
**FR - A - 2 212 378**
**FR - A - 2 337 173**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Echte, Adolf, Dr., Leuschnerstrasse 42,
D-6700 Ludwigshafen (DE)**
Erfinder: **Gausepohl, Hermann, Dr., Neuweg 10,
D-6704 Mutterstadt (DE)**

## Beschreibung

Die Erfindung betrifft hochschlagfeste thermoplastische Formmassen, die im wesentlichen Polystyrol als Matrix und in dieser Matrix gleichmäßig verteilt zwei kautschukartige, die Weichphase bildende Teilchen unterschiedlicher mittlerer Teilchengröße und in unterschiedlichen Mengen enthalten. Die Weichphase ist im wesentlichen aus Polybutadien oder Blockcopolymerisaten aus Butadien und Styrol aufgebaut.

Zum Stand der Technik nennen wir

1. DE-OS 2 620 576
2. DE-OS 2 603 289
   (Äquivalent US-PS 4 012 462)
3. US-PS 4 146 589.

Es ist bekannt, Styrolpolymerisate mit hohem Glanz herzustellen; ferner ist es bekannt durch eine breite oder bimodale Teilchenverteilung ein gutes mechanisches Niveau bei solchen Styropolymerisaten zu erzielen [vgl. (3) bzw. (1)].

Es gelang jedoch bisher nicht, diese beiden Eigenschaften miteinander in befriedigender Weise zu kombinieren. Die Aufgabe der vorliegenden Erfindung war es, hochglänzende Thermoplaste mit hohem mechanischen Niveau auf Basis von schlagfesten Styrolpolymerisaten herzustellen. Die Erfindung geht aus vom Stand der Technik, wie er beispielsweise aus (1) bekannt ist. Es wurde überraschenderweise gefunden, daß man thermoplastische Formmassen mit hohem Glanz und gutem mechanischen Niveau erhält, wenn man als Weichphase der thermoplastischen Formmasse die im kennzeichnenden Teil des Patentanspruchs bezeichneten Teilchenmorphologien einstellt.

Die Erfindung betrifft schlagfeste thermoplastische Formmassen, enthaltend im wesentlichen

A. Polystyrol als Matrix
   und

B. zwei darin gleichmäßig verteilte kautschukartige, überwiegend aus 1,3-Dienen aufgebaute (Co)-Polymerisate $b_1$) und $b_2$) in einem Anteil von 3 bis 30 Gew.-%, berechnet als Polydien und bezogen auf die Matrix, wobei die (Co)-Polymerisate als Teilchen unterschiedlicher mittlerer Teilchengröße ($d_{50}$-Wert der integralen Masseverteilung) enthalten sind, nämlich

   $b_1$) als Teilchen von 0,2—0,6 $\mu$, in einem Anteil von 60—95 Gew.-%, bezogen auf Polydien, und
   $b_2$) als Teilchen von 2—8 $\mu$m, in einem Anteil von 40—5 Gew.-%, bezogen auf Polydien,

   sowie gegebenenfalls

C. üblichen Zusatzstoffen in wirksamen Mengen,

dadurch gekennzeichnet, daß in der fertigen Formmasse das (Co)-Polymerisat

   $b_1$) eine Kapselteilchenmorphologie

und das (Co)-Polymerisat

   $b_2$) eine Zellen- und/oder Knäuelteilchenmorphologie

aufweisen.

Die erfindungsgemäße Formmasse enthält als Komponente A. im wesentlichen Polystyrol, das bei der Herstellung der Formmasse auf kontinuierlichem Wege durch Polymerisation einer monomeren aromatischen Vinylverbindung in Gegenwart von kautschukartigen Polymerisaten erzeugt wird oder auch durch Mischen von Schmelzen bzw. Auflösen und Eindampfen zweier bereits schlagfester Polystyrolharze, die gegebenenfalls im Handel erhältlich sein können, hergestellt werden kann.

Die erfindungsgemäße Formmasse enthält zwei kautschukartige (Co)-Polymerisate $b_1$) und $b_2$), die in einem Anteil von 3 bis 30 Gew.-%, bezogen auf die Matrix und berechnet als Reinpolydien vorliegen sollen. Besonders bevorzugt ist ein Anteil von 4 bis 20 Gew.-%, bezogen auf die Matrix. Das (Co)-Polymerisat $b_1$) soll in einem Anteil von 60 bis 95 Gew.-%, bevorzugt 70 bis 85 Gew.-%, bezogen auf Polydien, vorliegen und aus Teilchen eines mittleren Durchmessers im Bereich von 0,2 bis 0,6 $\mu$m, aufgebaut sein. Im Sinne der vorliegenden Erfindung soll unter dem mittleren Teilchendurchmesser der $d_{50}$-Wert der integralen Masseverteilung verstanden werden. Die Bestimmung erfolgt in der dem Fachmann bekannten Weise durch Vermessen der Teilchen in elektronenmikroskopischen Aufnahmen (vgl. F. Lenz, Z. f. wiss. Mikroskopie 63 (1956), S. 50/56). Das kautschukartige (Co)-Polymerisat $b_1$) soll eine sogenannte Kapselteilchenmorphologie aufweisen. Dem Fachmann ist bekannt, was unter einer solchen Morphologie zu verstehen ist, und wie diese im einzelnen erzeugt wird (vgl. Angew. Makromolekulare Chemie, 58/59 (1977), Seiten 175 bis 198). Zum Aufbau der Kapselteilchenmorphologie der Komponente $b_1$) der erfindungsgemäßen Formmassen können Polybutadiene oder Blockcopolymerisate aus Styrol und Butadien in den dem Fachmann bekannten Grenzen der Zusammensetzung eingesetzt werden. Wichtig ist lediglich, daß der Fachmann anhand einiger orientierender Versuche unter Probenahme während der für die Ausbildung der Morphologie entscheidenden Phase der Vorpolymerisation die Polymerisationsbedingungen festlegt.

Das (Co)-Polymerisat $b_2$) soll in einem Anteil von 40 bis 5 Gew.-%, vorzugsweise 30 bis 15 Gew.-%, jeweils bezogen auf Polydien, vorhanden sein. Die Teilchen sollen einen mittleren Teilchendurchmesser von 2 bis 8 μm, vorzugsweise 3 bis 6 μm aufweisen. Wesentlich ist, daß das (Co)-Polymerisat b2) entweder eine vom schlagfesten Polystyrol her bekannte übliche Zellenmorphologie aufweist oder so gearbeitet wird, daß eine Knäuelteilchenmorphologie vorliegt. Die Herstellung von kautschukartigen Polymerisaten mit Knäuelteilchenmorphologie ist dem Fachmann aus der eingangs zitierten Literaturstelle (loc. cit.) ohne weiteres möglich.

Die erfindungsgemäßen thermoplastischen Formmassen können zusätzlich zu den Komponenten A und B als weitere Komponente C übliche Zusatzstoffe enthalten, wie sie für derartige schlagfeste Styrolpolymerisate üblich sind. Als solche Zusatzstoffe seien beispielsweise genannt: Füllstoffe, weitere verträgliche Kunststoffe, Farbstoffe oder Pigmente, Antistatika, Antioxidantien, Flammschutzmittel und Schmiermittel. Diese Zusatzstoffe werden in den dem Fachmann bekannten Mengen angewendet.

Die Herstellung der erfindungsgemäßen Formmassen kann nach den dem Fachmann bekannten Verfahren erfolgen. So ist es möglich, die erfindungsgemäße Formmasse durch Mischen zweier schlagfester Polystyrole, die jeweils Polystyrol als Matrix und die kautschukartigen Polymerisate b1) bzw. b2) enthalten, durch Aufschmelzen zu mischen. Derselbe Vorgang kann in Lösung unter anschließender Entgasung durchgeführt werden. Es ist gleichermaßen möglich, zwei verschiedene Pfropfpolymerisate in einem kontinuierlichen Verfahren herzustellen, die Vorpolymerisation mit der Einstellung der Teilchengröße und der Morphologie der Teilchen separat durchzuführen und danach die beiden Vorpolymerisate in bestimmten Verhältnissen zusammenzuführen und die Polymerisation dann gemeinsam bis zu dem angestrebten hohen Feststoffgehalt von z. B. 80 oder 90% durchzuführen.

Die erfindungsgemäßen Formmassen lassen sich nach den für die Thermoplastverarbeitung üblichen Verfahren, wie Extrusion und Spritzgießen, zu den verschiedenartigsten Formteilen verarbeiten.

Der Glanz wurde mit einem Multiflexgalvanometer nach Dr. Lange gemessen; dazu werden die erhaltenen Produkte bei einer Temperatur von 260°C spritzgegossen. An diesen Spritzlingen wird die relative Reflektion der Oberfläche in Prozent des einfallenden Lichts gemessen. Als Standard dient Filterpapier mit einem Reflektionswert von 0%.

Die Lochkerbschlagzähigkeit, $a_{KL}$ (kJ/m²) wird nach dem DIN-Entwurf auf Beschluß des Fachnormenausschusses Kunststoffe 4.3 von März 1975, in Vorbereitung, bestimmt.

Die Erfindung wird nachstehend anhand von Beispielen und Vergleichsversuchen näher erläutert. Alle angegebenen Teile und Prozente beziehen sich, sofern nichts anderes vermerkt ist, auf das Gewicht.

Beispiel 1

10 Teile eines schlagfesten Polystyrols (a) mit einem Kautschukteilchendurchmesser von 5—6 μm wurden auf einem Extruder bei 230°C mit 90 Teilen eines schlagfesten Polystyrols (b) mit Kapselteilchenmorphologie (Ø : 0,4 μm) gemischt.

Das Produkt (a) besaß eine Zellenteilchenmorphologie und einen Polybutadiengehalt von 8%.

Das Produkt (b) besaß einen Polybutadiengehalt von 9%.

An der erhaltenen Mischung wurde eine Remission von 68% gemessen; die Lochkerbschlagzähigkeit, $a_{KL}$, betrug 13,4 kJ/m².

Vergleichsversuch

100 Teile des Produktes (b) besitzen einen Remissionswert von 71% und eine Lochkerbschlagzähigkeit von nur 10,2 kJ/m². — 100 Teile des Produktes (a) besitzen eine Lochkerbschlagzähigkeit von 11,5 kJ/m² und eine Remission von nur 22%.

Beispiel 2

Beispiel 1 wurde wiederholt, indem 30 Teile des Produktes (a) mit 70% Teilen des Produktes (b) gemischt wurden. An der Mischung wurden bestimmt die Remission zu 60% und die Lochkerbschlagzähigkeit, $a_{KL}$ zu 15,8 kJ/m².

Beispiel 3

Eine Lösung von 12 Teilen eines Styrol-Butadien-Blockcopolymeren (60 B/40 S) in 6 Teilen Ethylbenzol, 2 Teilen Paraffinöl, 0,02 Teilen tert.-Dodecylmercaptan und 79,98 Teilen Styrol wurde kontinuierlich bis zu einem Feststoffgehalt (FG) von 40% polymerisiert. Dabei stellt sich eine Kapselteilchenmorphologie ein (a).

Desgleichen wurde eine Lösung von 2,2 Teilen eines medium-cis-Polybutadiens und 8,4 Teilen eines Styrol-Butadien-Blockcopolymeren (60 B/ 40 S) in 6 Teilen Ethylbenzol, 2 Teilen Paraffinöl und 0,02 Teilen tert.-Dodecylmercaptan sowie 81,38 Teilen Styrol kontinuierlich bis zu einem FG = 40% vorpolymerisiert. Man erhält so die Knäuelteilchenmorphologie mit einer mittleren Teilchengröße von ca 6 μm (b). Die beiden Vorpolymerisate wurden sodann in einem Verhältnis von a : b = 4 : 1 zusammengeführt und bis zu einem Feststoffgehalt von 80% auspolymerisiert und wie üblich vom Lösungsmittel und von flüchtigen Anteilen befreit.

Das erhaltene schlagfeste Polystyrol wies die gleiche Morphologie und Teilchengrößenverteilung, wie die Vorpolymerisate a und b auf. Am Endprodukt wurde die Remission von 63% und eine Lochkerbschlagzähigkeit, $a_{KL}$, von 17,2 kJ/ m² ermittelt.

## Patentanspruch

Schlagfeste thermoplastische Formmasse, enthaltend im wesentlichen

A. Polystyrol als Matrix und

B. zwei darin gleichmäßig verteilte kautschukartige, überwiegend aus 1,3-Dienen aufgebaute (Co)-Polymerisate $b_1$) und $b_2$) in einem Anteil von 3 bis 30 Gew.-%, berechnet als Polydien und bezogen auf die Matrix, wobei die (Co)-Polymerisate als Teilchen unterschiedlicher mittlerer Teilchengröße ($d_{50}$-Wert der integralen Masseverteilung) enthalten sind, nämlich
   $b_1$) als Teilchen von 0,2 bis 0,6 µm, in einem Anteil von 60—95 Gew.-%, bezogen auf Polydien, und
   $b_2$) als Teilchen von 2—8 µm, in einem Anteil von 40—5 Gew.-%, bezogen auf Polydien,

   sowie gegebenenfalls

C. üblichen Zusatzstoffen in wirksamen Mengen,

dadurch gekennzeichnet, daß in der fertigen Formmasse das (Co)-Polymerisat

   $b_1$) eine Kapselteilchenmorphologie

und das (Co)-Polymerisat

   $b_2$) eine Zellen- und/oder Knäuelteilchenmorphologie

aufweisen.


## Claim

An impact-resistant thermoplastic molding material which essentially contains

A. polystyrene as the matrix, and

B. uniformly dispersed therein, two elastomeric polymers or copolymers $b_1$) and $b_2$), predominantly composed of 1,3-dienes, in an amount of from 3 to 30% by weight, calculated as polydiene and based on the matrix, the polymers or copolymers being present as particles of different mean size (different $d_{50}$ of the cumulative mass distribution), namely
   $b_1$) as particles of 0.2—0.6 µm, in an amount of 60—95% by weight, based on polydiene, and
   $b_2$) as particles of 2—8 µm, in an amount of 40—5% by weight, based on polydiene, with or without

C. conventional additives, in effective amounts,

in which final molding material the polymer or copolymer $b_1$) has a capsule particle morphology and the polymer or copolymer $b_2$) has a cell and/or coil particle morphology.


## Revendication

Matière à mouler thermoplastique résistant au choc, contenant essentiellement

A. du polystyrène comme matrice et

B. deux (co)-polymérisats $b_1$) et $b_2$) caoutchouteux, principalement constitués de diènes-1,3, répartis uniformément dans la matrice, en une proportion de 3 à 30% en poids par rapport à la matrice, calculée comme polydiène, les (co)-polymérisats étant présents sous forme de particules avec des granulométries moyennes (valeur $d_{50}$ de la répartition intégrale des masses) différentes, à savoir:
   $b_1$) sous forme de particules de 0,2 à 0,6 µm en une proportion de 60 à 95% en poids par rapport au poly-diène et
   $b_2$) sous forme de particules de 2 à 8 µm en une proportion de 40 à 5% en poids par rapport au poly-diène,

   et éventuellement

C. des additifs usuels en des proportions efficaces,

caractérisée en ce que, dans la matière à mouler finie, le (co)-polymérisat $b_1$) est présent sous forme de particules avec une morphologie de particules enrobées et le (co)-polymérisat $b_2$) sous forme de particules avec une morphologie cellulaire et(ou) glomérulaire.